# EUROPEAN PATENT APPLICATION

(11) **EP 2 003 155 A1**
(43) Date of publication of application: **17.12.2008**
(21) Application number: 07110184.4
(22) Date of filing: 13.06.2007
(51) Int. Cl.: C08G 18/10, C08L 83/04

(54) **Two-component curable polymer materials**

(71) Applicant: Intercon Holland B.V., 5141 MT Waalwijk (NL)
(72) Inventor: Blom, Cornelis Willem, 2171 AA, Sassenheim (NL)
(74) Representative: van Loon, C.J.J.

(57) **Abstract**

The invention relates to a two-component curable polymer system comprising a first component including a water-curable silane-modified polymer and a second component comprising water as a curing agent wherein said second component is in the form of a paste or gel.

## Description

### FIELD OF THE INVENTION

The present invention is in the field of two-component curable polymer materials suitable for use as a repair material, a coating material, a sealant and/or an adhesive.

### BACKGROUND OF THE INVENTION

Epoxy, the polymer made of epoxide units, is a resin material generally used for the preparation of coatings and adhesives that must exhibit toughness and durability. Polymeric epoxy resin or polyepoxides will form a tough network when epoxides of different polymer chains become chemically cross-linked by a curing agent (also called a hardener or catalyst), often a di-amine. The coating and adhesive compositions based on polyepoxides are often supplied as a two-component system (resin plus hardener), wherein the monomeric or pre-polymeric resin is mixed with the curing agent just prior to application. As the mixture "cures," it becomes a hard polymer in a short period of time depending on the ambient temperature. The characteristics of hardened epoxies (such as whether they are firm or flexible, or resistant to heat or chemicals) depend on which epoxy monomers or pre-polymers, curing agents, and optional additional components such as solvents and fillers are added. While the hardened, finished polymer is almost non-toxic, the uncured resin components and the curing agent are, and exposure to these uncured components can be harmful. That is the reason they are subject to health and safety regulations and symbols on the packaging are required to indicate the danger specification. Water-based epoxies provide no alternative, as the only component replaced therein is the solvent, not the resin or hardener.

Several less toxic alternatives are available for the use of epoxies, such as materials based on polyurethanes or polysiloxanes.

Polyurethanes are polymers containing a urethane bond in their backbone. A urethane bond (-RNHCOOR'-) is the reaction product of an isocyanate group (R-N=C=O) with a hydroxyl or alcohol group (R'-OH). Linear polyurethanes are produced by reacting a di-isocyanate with a diol or polyol, while cross-linked products are produced by reaction of polyisocyanates with polyol, optionally in the presence of a catalyst and other additives. Again, the cross-linking (curing) of the material, requires two reactants which, once brought into contact with one another, result in immediate curing and eventually in a cured product. The poly-isocyanate component (the "iso") is therefore provided separately from the polyol component (the "resin") resulting in a typical two-component system. Commonly, polyurethanes are foamed products, often resulting from poly-isocyanates reacting with water under the formation of a urea bond and the liberation of carbon dioxide. The properties of polyurethane may however be varied by using various amounts of chain extenders, cross linkers, surfactants, fire retardants, blowing agents, pigments, or fillers in any of the starting components.

Many polyurethanes have the disadvantages that they exhibit very low crack resistance. Moreover, they are generally not resistant to high temperatures. Also, health and safety issues are associated with the use of polyurethanes.

Epoxies are generally hard en brittle, and due to the presence of significant amounts 40-50 wt% of fillers and extenders, they exhibit poor adhesion to substrate and low crack resistance. Although other epoxies may be flexible when the level of cross-linking is kept low, such materials have no internal (elasticity) memory in relation to shape (i.e. low elastic recovery), exhibit poor adhesion to surfaces and exhibit low crack resistance.

For many applications elastic materials that have an internal memory with respect to shape are desired. Preferably, such materials comprise no extenders and fillers in order to provide for good adhesion, and require limited use of solvents, since solvents inevitably give rise to shrinking of the final product.

Polysiloxane (i.e. silicone) polymers contain an inorganic backbone of repeating silicon-oxygen atoms. A synthetic rubber can be formed on the basis of these polymers when individual polymer chains are cross-linked via organic side groups that are pending from the backbone. As a consequence, the chemistry of the cross-links and thus the properties of the final material may vary widely. Polysiloxanes are for instance known for their internal shape memory. These polysiloxanes may also be provided in the form of a two-component system.

A drawback of two-component systems is, however, that they require thorough mixing of resin and curing agent in order to obtain a homogeneous material. Also, the ratio of resin vs. curing agent must be precise in order to obtain the optimum mixed material for a durable result in order to prevent cracking and/or improper hardening.

In the field of polysiloxane- and polyurethane-based adhesives and coatings, so-called one-component compounds are known that are curable in the presence of atmospheric moisture. US 7,005,477, for instance describes such a compound based on polyurethane, while US 5,434,198, US 6,090,904 and US 6,749,943 describe compounds based on polysiloxane. The compounds are termed "one-component" because mixing of the basic compound with a specific chemical curing agent prior to use is not required. After all, the curing agent, water, is derived from the atmosphere once the compound is exposed to air. The water is required merely to complete the cross-links between the pre-polymers. The curing (cross-linking) involves the reaction of an isocyanate group with water (moisture) to form an amino group, which then reacts with another isocyanate group to form a urea group (RR'N-CO-NRR', a carbonyl group flanked by two amine residues). What is necessary for moisture-curing polyurethanes is that the uncured composition (prepolymers) comprises an excess of isocyanate groups that can crosslink due to the formation of amines in the material under the influence of atmospheric moisture as described above. The prepolymer mixture is produced by polymerizing isocyanates with diols and triols such as castor oil and polyethers, resulting in "prepolymers" with unreacted terminal isocyanate groups, which react with atmospheric moisture to form the finished cross-linked polymer. The result is an insoluble higher molecular weight polymer comprising a mixture of polyurethanes and polyureas.

As stated, the reaction mechanism of moisture-curing polyurethanes/polyureas results in liberation of carbon dioxide, hence, polyurethane/polyureas are foamed products. In most applications, however, such as coatings, but also sealants and (wood-)repair materials, foaming is disadvantageous and the carbon dioxide must be actively scavenged during the reaction, usually by addition of magnesium oxide or calcium oxide.

The disadvantage of these air-moisture-cured products is further that the curing process starts at the surface of the material and gradually moves inward into the material, resulting in a cured outer layer that forms a waterproof seal, and a non-cured interior which lacks the mechanical properties so required. Also, as a result of the waterproof seal, the curing process is slow, and relatively long periods of time are required to achieve the optimal strength of the material. Especially in relatively large-volume applications such as where the material is used in the form of a filler (a repair compound e.g. for wood, and a sealer for glass panels and joints), the curing is often incomplete and/or may suffer from forming defects, such as cracks.

It is an aim of the present invention to provide a moisture curable polymer composition wherein the curing process is initiated throughout the material and therefore progresses simultaneously inside as well as at the outer surface of the material when applied. It is a further aim of the invention that the material does not foam and/or crack, and combines a high internal strength with high level of elasticity (i.e. high elastic recovery). Moreover, the adhesive strength of the material is preferably such that primers (for priming the surface of the materials) are not necessary.

### SUMMARY OF THE INVENTION

The objective has now been achieved by the provision of a two-component curable polymer system comprising a first component including a water-curable silane-modified polymer and a second component comprising a curing agent wherein said second component is in the form of a paste or gel, and wherein said curing agent is water.

In general, any condensation curing organopolysiloxane may be used as the silane-modified polymer, in particular such organopolysiloxanes having hydrolyzabe groups that cure in the presence of moisture are envisioned. In a preferred embodiment, the silane-modified polymer is a silyl-terminated polymer.

In another preferred embodiment, the paste or gel is a solution, suspension or dispersion of a thickener in water.

As thickener, any material can be used that can increase the viscosity of water. Preferably, an organic polymer or biopolymer is used. Suitable thickeners include for instance such compounds as agar, agarose, albumin, algae colloid (seaweed extract), alginate, alginate propylene glycol esters, aluminum magnesium silicate (bee gum), bentonite, carbomer, carboxymethyl cellulose (CMC), carboxymethyl starch, (alkyl modified) carboxyvinyl polymer (Carbopol), carrageenan, carob gum, caseine, cellulose powder, chitosan, collagen, crystalline cellulose, curdlan, dextran, dextrin, dialkyldimethyl ammonium sulfate cellulose, ethylcellulose, fibrinogen, fructo-oligosaccharides, galactan, gelatin, glycyrrhinic acid; guar gum, gum arabic, hectonite, hydroxyethylcellulose, hydroxypropylcellulose, hydroxypropyl methylcellulose (Hypromellose), inorganic silicic acid, inulin, karaya gum, laponite, locust bean gum, methylcellulose, methylhydroxypropyl cellulose, methylhydroxpropyl starch; nitrocellulose, pectin, polyacryl amide, polyethylene glycol, polyethylene acrylate, polyethylene imine, polyoxyethylene polyoxypropylene copolymer, polyvinyl alcohol, polyvinylmethyl ether, polyvinylpyrrolidone, pullulans, quince seed (Marumero), sodium alginate, sodium cellulose sulfate, sodium pectinate, sodium polyacrylate, (modified) starch (rice, corn, potato, wheat), succinoglutan, talc, tamarind gum, tragacanth gum, tapioca dextrin, tylose, xanthan gum, (arabino)xylan, zein, and oligomers thereof, as well as combinations and mixtures thereof. A highly preferred thickener is methylcellulose.

The thickener is used in the water gel or paste (i.e. in the second component) in amounts from 0.1 to 50wt.%, with from 0.5% to 5% being preferred.

In another preferred embodiment, the the second component is preferably provided in a ratio of 1 - 5 wt.% based on the weight of the mixed composition before curing.

In another preferred embodiment, the second component further comprises silicon dioxide particles (e.g. Sipernat® 22S), preferably in the form of nanoparticles.

In another preferred embodiment, the water-curable silane-modified polymer is a Silane Modified Polyurethane Prepolymer (SPUR)).

In another aspect, the present invention relates to a cured polymer composition formed as a reaction product of a silane-modified polymer and water as a curing agent in the form of a paste or gel. Preferably, the cured polymer composition has a shore-A hardness of between 80 and 90, more preferably at least 82, even more preferably above 85. More than 90 would result in a material that is too brittle, less than 80 would result in a material of insuffient strength. In another preferred embodiment, the cured polymer composition is a transparant adhesive, a sealant or a (wood-)repair material.

In another aspect, the present invention relates to the use of water in the form of a paste or gel as a curing agent for curing a silane-modified polymer, wherein said paste or gel is obtained by mixing said water with an appropriate amount of thickener, preferably methylcellulose.

In another aspect, the present invention relates to a (wood-)repair material comprising the curable polymer system of the present invention.

In another aspect, the present invention relates to the use of a cured polymer composition of the present invention in the form of an adhesive composition, a sealant composition (joint sealing applications), an elastomer composition, a coating composition, a repair material or a dental repair composition.

In another aspect, the present invention relates to a method of preparing a cured polymer composition comprising the steps of mixing a first component including a water-curable silane-modified polymer with a second component comprising water as a curing agent wherein said second component is in the form of a paste or gel, and allowing the mixture to cure.

### DETAILED DESCRIPTION OF THE INVENTION

The term "silanes" as used herein refers to saturated silicon hydrides of the general formula SiₙH₂ₙ₊₂. A silane is any silicon analogue of an alkane hydrocarbon. Silanes may be subdivided into silane (SiH4), oligosilanes and polysilanes.

The term "siloxane" as used herein refers to saturated silicon-oxygen hydrides with unbranched or branched chains of alternating silicon and oxygen atoms (each silicon atom is separated from its nearest silicon neighbours by single oxygen atoms). The general structure of unbranched siloxanes is H₃Si[OSiH₂]ₙOSiH₃, while an example of a branched siloxanes is H₃Si[OSiH₂]ₙOSiH[OSiH₂OSiH₃]₂.

The term "silicone" as used herein refers to polymeric or oligomeric siloxanes, usually considered unbranched, of general formula [-OSiR₂-]ₙ (R not equal to H). Usually, the term "silicone" refers to polymerized siloxanes or polysiloxanes.

The "silyl" group is indicated by H₃Si-, and is derived from silane (SiH4).

In the present invention the silane-modified polymer is preferably a silyl modified polymer. A silyl modified polymer is an organic polymer having hydrolysable silyl groups and can be, for example, a polymer prepared by copolymerising monomeric material comprising ethylene with an unsaturated silane compound having hydrolysable groups or can be, for example, a graft polymer prepared by grafting an unsaturated silane compound having hydrolysable silane groups on to a polyethylene or an ethylene copolymer. In other preferred embodiment, silyl modified polymers can be copolymers prepared by copolymerising ethylene, optionally together with one or more alpha-olefins, vinyl esters, alkyl(meth)acrylates, unsaturated nitriles or unsaturated ethers, with an unsaturated silane compound in the presence of a free radical initiator. Also suitable are graft polymers prepared by grafting an unsaturated silane compound on to polyethylene or on to a copolymer of ethylene with one or more alpha-olefins, vinyl esters, alkyl(meth)acrylates, unsaturated nitriles or unsaturated ethers (eg vinyl ethers), by heating the polyethylene, or copolymer of ethylene, with the unsaturated silane compound in the presence of a free radical initiator, for example, an organic peroxide. The polyethylene or copolymer of ethylene can comprise, for example, low density polyethylene, low density ethylene hydrocarbon copolymers (e.g. LLDPE), high density polyethylene, ethylene/ethyl acrylate copolymer, ethylene/vinyl acetate copolymer or ethylene propylene rubber (EPR).

In general, examples of silyl-terminated polymers that may be used in the curable compositions of this invention include silylated polyethers, silylated polyacrylates and silylated polyurethane prepolymers (SPUR). The silylated polymers or silyl-terminated polymers used in the curable compositions of this invention include two or more reactive silyl groups, e.g., α, ω-telechelic silyl-terminated polymers.

An example of a suitable silyl-terminated polymer that may be used is an oxyalkylene polymer having at least one reactive silyl group at each end of the polymer molecule. The backbone of the silyl-terminated oxyalkylene polymer has repeating units represented by the formula: -R-O- wherein R represents a divalent organic group, preferably a straight or branched alkylene group containing 1 to 14 carbon atoms, and more preferably straight or branched alkylene groups containing 2 to 4 carbon atoms. Especially preferred are polypropylene oxide backbones, polyethylene oxide backbones, and copolyethylene oxide/polypropylene oxide backbones. Other repeating units may include, but are not limited to -CH₂O-, -CH₂CH(CH₃)O-, -CH₂CH(C₂H₅)O-, -CH₂C(CH₃)₂O-, -CH₂CH₂CH₂CH₂O- and the like.

The reactive silyl group contained in the silyl-terminated polymers may be represented by the formula: -[Si(R²)_{2-*a*}(X)*ₐ*O]*ₚ*-Si(R³)_{3-*b*}(X)*_{b}* wherein R² and R³ are the same or different and each represents an alkyl group containing 1 to 20 carbon atoms (including, but not limited to, methyl, ethyl, isopropyl, butyl, t-butyl, cyclohexyl and the like), an aryl groups containing 6 to 20 carbon atoms (including, but not limited to, phenyl, naphthyl and the like), an aralkyl group containing 7 to 20 carbon atoms (including, but not limited to, benzyl and the like) or a triorganosiloxy group of the formula (R⁴)₃SiO-(wherein R⁴ independently represents a hydrocarbon group containing 1 to 20 carbon atoms) and, when two or more R² and/or R³ groups are present, they may be the same or different; X represents a hydrolyzable group or a hydroxyl group and, when two or more X groups are present, they may be the same or different; a represents an integer of 0 to 2; b represents an integer of 0 to 3; and p represents an integer of 0 to 19 and, when p is 2 or more, the - [Si(R²)_{2-*a*}(X)*ₐ*O] groups may be the same or different. In the reactive silyl group represented by the above general formula, there is at least one hydrolyzable group or hydroxyl group represented by X.

The above-mentioned hydrocarbon group containing 1 to 20 carbon atoms (R⁴) includes, but is not limited to, methyl, ethyl, isopropyl, butyl, t-butyl, pentyl, ethynyl, 1-propenyl, vinyl, allyl, 1-methylbutyl, 2-ethylbutyl, phenyl and the like.

The above-mentioned hydrolyzable group (X) is not limited to any particular species and includes a hydrogen atom, halogen atoms, and alkoxyl, acyloxy, ketoximate, amino, amido, acid amido, aminoxy, mercapto, alkenyloxy and the like groups. Among these, a hydrogen atom and alkoxyl, acyloxy, ketoximate, amino, amido, aminoxy, mercapto and alkenyloxy groups are preferred and, from the viewpoint of mild hydrolyzability and ease of handling, alkoxyl groups are particularly preferred.

One to three hydroxyl groups and/or hydrolyzable groups each presented by X may be bound to one silicon atom. The sum total of the hydroxyl and/or hydrolyzable groups in the reactive silyl group represented by the above general formula is preferably within the range of 1 to 5.

The number of silicon atoms forming the above-mentioned reactive silyl group may be 1 or 2 or more.

In the practice of the present invention, those reactive silyl groups which are represented by the general formula shown below are preferred because of their ready availability: -Si(R³)_{3-*b*}X*_{b}* wherein R³, X and b are as defined above.

Methods of introducing a reactive silyl group onto a polymer, such as a polyether, or more specifically a polyoxyalkylene polymer, are well known in the art. For example, polymers having terminal hydroxyl, epoxy or isocyanate functional groups can be reacted with a compound having a reactive silyl group and a functional group capable of reacting with the hydroxyl, epoxy or isocyanate group.

As another example, silyl-terminated polyurethane polymers may be used. A suitable silyl-terminated polyurethane polymer may be prepared by reacting a hydroxyl-terminated polyether, such as a hydroxyl-terminated polyoxyalkylene, with a polyisocyanate compound, such as 4,4'-methylenebis-(phenylisocyanate), to form an isocyanate-terminated polymer, which can then be reacted with an aminosilane, such as aminopropyltrimethoxysilane, to form a silyl-terminated polyurethane.

In general, silyl-terminated polyesters are those having the reactive silyl groups discussed above with a backbone comprising -O-CO-R⁵-CO-O-R⁶- or -R⁷-CO-O- repeat units, wherein R⁵, R⁶ and R⁷ are divalent organic groups such as straight or branched alkylene groups.

The silyl-terminated polymers used in this invention may be straight-chained or branched, and typically have a weight average molecular weight of from about 500 to 50,000 Daltons, and more preferably from about 1,000 to about 30,000 Daltons.

Very suitable SPURs are molecules consisting of polyoxypropylene (PPG) chains as the polymer "backbone", and of reactive silane (terminal) end groups and optional base chains which are linked to the polyoxypropylene chain via polyurethane units. As such these polymers represent block-copolymer consisting of a polyurethane hard block ensuring strength and a polyoxypropylene soft block ensuring flexibility. Such prepolymers are commercially available as Polymer ST (for: Silane Terminated)

Suitable silyl-terminated polyethers are commercially available from Kaneka Corporation under the names KANEKA MS POLYMER^{™} and KANEKA SILYL^{™}, and from Union Carbide Specialty Chemicals Division under the name SILMOD^{™}.

A particularly preferred silane-modified polymer is Polymer ST61 (Hanse Chemie, Geesthacht, Germany) or Sealer 301 (Hercuseal BV, Giessen, The Netherlands) wherein terminal silyl-groups are linked to a polyalkylene (e.g. polypropylene) backbone via polyurethane linkers. Such a polymer is an example of a Silane Modified Polyurethane Prepolymer (SPUR). SPURs are preferred silane-modified polymers in compositions of the present invention.

The silyl modified polymer can be formed "in situ" in the presence of the other component(s) of the composition of the present invention, for example, by grafting an unsaturated silane compound on to polyethylene or on to a copolymer of ethylene in the presence of a free radical polymerisation initiator and in the presence of a phosphorus or antimony compound and optionally in the presence of a silanol condensation catalyst as described i.a. in US 4,574,133.

Another method for forming silyl modified copolymers which can be employed in the composition of the present invention is the known "transesterification" method. In this method, for example, the alkoxy groups present in an ethylene/alkyl(meth)acrylate copolymer can be "ester exchanged" or replaced by a silane substituent bearing hydrolysable groups by reacting the copolymer with a suitable silane compound in the presence of a catalyst (for example, titanium tetraisopropylate). Examples of suitable silane compounds are acetoxy propyl trimethoxy silane, acetoxy propyl triethoxy silane, methacryloxypropyl trimethoxy silane, acryloxypropyl trimethoxy silane, methacryloxypropyl triethoxysilane and acryloxypropyl triethoxy silane. The transesterification method can also be used to prepare silyl modified copolymers by reacting an ethylene/vinyl acetate copolymer with a suitable silane compound bearing hydrolysable groups and having esterified carboxylic acid goups which exchange with the acetate groups on the copolymer. A suitable silane compound is 4-[tri(m)ethoxysilyl] butanoic acid (m)ethyl ester.

Silyl modified polymers also suitable for use in the composition of the present invention are copolymers prepared by copolymerising ethylene, optionally together with up to 40% by weight (based on ethylene) of additional monomer selected from one or more vinyl esters or (meth)acrylates, and an unsaturated silane compound selected from vinyl trialkoxy silanes, vinyl tris(alkoxyalkoxy) silanes and vinyl triacetoxy silane, under a pressure of from 500 to 4000 bars and at a temperature in the range 150° to 400°C. in the presence of a free radical polymerisation initiator.

For further details of silyl modified polymers suitable for use in the present invention reference may be made to GB-A-2028831, GB-A-2039513, GB-A-1357549, GB-A-1415194, GB-A-1286460, GB-A-1234034 and U.S. Pat. No. 3,225,018.

In the preferred embodiment of the present invention a silanol condensation catalyst may be present in the curable composition. Any of the silanol condensation catalysts known in the art for crosslinking silyl modified polymers can be suitably employed in the present invention. Examples of suitable classes of silanol condensation catalysts are organic and inorganic acids and alkalis, and metal compounds, for example complexes or carboxylates of lead, cobalt, iron, nickel, zinc or tin. Specific examples of the silanol condensation catalyst are dibutyl tin dilaurate, dibutyl tin diacetate, dibutyl tin dioctoate, stannous acetate, stannous caprylate, lead naphthenate, zinc caprylate, cobalt naphthenate; ethylamines, dibutylamine, hexylamines, pyridine; inorganic acids such as sulfuric acid and hydrochloric acid; and organic acids such as toluenesulfonic acid, acetic acid, stearic acid and maleic acid. Carboxylates of tin are preferred. Particularly preferred silanol condensation catalysts are dialkyl tin dicarboxylates, for example dibutyl tin dilaurate, dibutyl tin dipalmitate, dibutyl tin distearate and dioctyl tin dilaurate.

The quantity of silanol condensation catalyst employed in the preferred embodiment of the present invention is suitably in the range 0.001 to 3.0 moles, preferably in the range 0.003 to 0.05 moles per mole of silyl units in the silyl modified polymer.

Generally speaking, the quantity of the catalyst to be blended into the composition is in the range of 0.001 to 10 % by weight, preferably 0.01 to 5% by weight particularly preferably 0.03 to 3% by weight, relative to the quantity of the silyl modified polymer in the composition.

In other embodiments of the present invention, the curable composition comprises a silyl modified polymer having hydrolysable silyl groups and further the defined phosphorus or antimony compound and the defined silanol condensation catalyst as specified in US 4,574,133.

The silane-modified polymer as described above is a part of a first component in a two-component curable polymer system according to the present invention. The amount of silane-modified polymer in a first component is generally about 35-95 wt.%, more preferably about 50-85 wt.% still more preferably about 70-75 wt%, based on the weight of the first component.

The two-component curable polymer system further comprises a second component comprising a curing agent wherein said second component is in the form of a paste or gel, and wherein said curing agent is water. The second component may comprise between 1 to 99 wt.% of water, based on the weight of the second component, preferably, the amount of water is between 60 and 80, more preferably about 70 wt.%, based on the weight of the second composition. The amount of water in a system of the invention, that is, in the final composition upon mixing of the first and second component, will in general range from about 0.1 to about 10 wt.%, preferably the amount is in a range of 0.5 to 5 wt.%, most preferably from about 2 to 4 wt% based on the total weight of the final (mixed) composition.

Therefore in a preferred embodiment of a system of the invention, the first and second component are mixed in a ratio of about 10-90 weight parts first component to 1 weight parts second component. Lower or higher amounts of second component can be mixed with the first component in order to reduce or increase the amount of water in the final composition (before curing). However, a system that is convenient and easy two prepare may for instance be obtained by providing a system wherein the ration of first to second component are mixed in a ratio of 20-30 weight parts first component to 1 weight parts second component. More preferably 25 weight parts of first component to 1 weight part of second component.

The second component in all aspects of the present invention further comprises a thickener. This ingredient provides for miscibility of the curing agent (water) with the first prepolymer containing composition. The amount of thickener is not very critical, as long as the second component is obtained in a gel-like or paste/putty-like form. The amount of thickener required will therefore depend on the type of thickener used. In general, when using for instance methylcellulose, an amount of 0.1-10 wt%, more preferably of about 0.5 - 5 wt.%, even more preferably about 0.7-1 wt.% of thickener is comprised in the second component. When preparing the second component, the thickener is suitably provided in the form of a concentrated solution in water.

The composition of the present invention can contain additives conventionally employed in the art. Examples of such additives are fillers, resin extenders, drying agents, antioxidants, metal deactivators (e.g. salicylaldehyde oximes), lubricants, flame retardants and pigments, dehydrating agents, tackifiers, physical property modifiers, storage stability improving agents, adhesion promoters/bonding agents, ultraviolet absorbers, antiozonants, (UV) light stabilizers, amine type radical chain inhibitors, phosphorus-containing peroxide decomposers, lubricants, anti-foaming agents and antistatic agents, each in an adequate amount. Additives of this type are conventionally incorporated into either the first or second composition of the two-component system, or both. The fillers mentioned above include, but are not limited to, wood powder, walnut shell flour, rice hull flour, pulp, cotton chips, mica, graphite, diatomaceous earth, china clay, kaoline, clay, talc, fumed silica, precipitated silica, silicic anhydride, quartz powder, glass beads, calcium carbonate, magnesium carbonate, titanium oxide, carbon black, glass balloons/bubbles, aluminum powder, zinc powder, asbestos, glass fiber, fly ash, carbon fiber and those known under the tradenames of Sipernat® and/or Aerosil® both available from Degussa GmbH, Düsseldorf, Germany. The above fillers may be used individually or in combination. A typical amount of filler will be in the range of 1-50 wt %, typically about 20 wt.% based on the weight of the final composition (i.e. first and second components mixed). The fillers may be provided to either the first and second component, but the bulk is preferably comprised in the first component, that also comprises the water-curable silan-modified polymer. In the second component, that comprises the water as curing agent, the fillers may provide a very valuable ingredient as they may serve to increase the volume and viscosity/thickness of the first component by adsorbing the water. A suitable amount in the second component may be in the range of 1-40 wt.%, preferably about 20 wt.%.

As bonding agents, vinyltrimethoxysilan (VTMO) or 3-aminopropyl trimethoxysilane (AMMO) may for instance be used, as well as other bonding agents known in the art, and combinations thereof. Such compounds are for instance available from Degussa under the tradename Dynasylan®. A typical amount of bonding agent will be in the range of 1-10 wt %, typically about 5 wt.% based on the weight of the final composition (i.e. first and second components mixed). The bonding agent may be provided to either the first and second component, but is preferably comprised in the first component, that also comprises the water-curable silan-modified polymer.

The composition of the present invention can be used to manufacture cured products using the technology known in the manufacture of articles from conventional silyl modified polymers of this type. For example, the composition can be use in blow-moulding, injection-moulding, film-blowing, calendering, extrusion, roto-moulding and extrusion-coating techniques. The composition of the present invention may further be coated onto a surface by various methods including spraying, rolling, dipping pouring or brushing. Highly preferred compositions have paste-like appearance and are applied to a desired location by injection, or by streaking or blade coating.

The advantage of the cured product of the present invention over the known polyurethane products are the absence of gloss-differences after painting, no requirements for use of a primer, a temperature-independant curing and a good paintability. Moreover, the composition lacks the irritating odour of conventional products such as silicone kits.

A cured product of the present invention is preferably characterized by a shore A hardness of at least 80, more preferably at least 81, more preferably at least 87. Shore hardness is a measure of the resistance of material to indentation. Hardness, using either the Shore A or Shore D scale, is the preferred method for rubbers/elastomers. The shore A Hardness is the relative hardness of a material (usually elastic materials such as rubber or soft plastics) and can be determined with an instrument called a Shore A durometer. If the indenter completely penetrates the sample, a reading of 0 is obtained, and if no penetration occurs, a reading of 100 results. The reading is dimensionless. Such shore harnesses can be reached by selecting the proper a water-curable silane-modified polymer in the first component of the composition of the present invention.

Preferably, the breaking load or force at rupture of the cured material is about 300-600 N, more preferably about 400-500 N, most preferably about 480 N.

The cured material in a preferred embodiment exhibits an elongation or stretch at break of 25-75%, more preferably of about 30-60 %, most preferably about 50 %.

The cured material in a preferred embodiment exhibits an E-modulus of 250-500 N/mm², more preferably of about 300-400 N/mm², most preferably about 360 N/mm².

The invention will now be illustrated by way of the following. non-limiting examples. Improvements thereon can readily be found by the skilled artisan.

### EXAMPLE

### Example 1: Transparant adhesive

A transparent adhesive was prepared based on MS polymer obtained from the Sealer 301 (Hercuseal BV, Giessen, The Netherlands). Into this material an amount of 3-5 wt.% based on the weight of the final composition of a paste consisting of a solution of methylcellulose in water was added by thorough mixing. The composition cured completely and in ca. 25 minuten and demonstrated a deep and thorough cure.

### Example 2: Woodrepair epoxy free

• Based on moisture-curable polymer (Sealer 301); (alternative silane modified polyurethanes may be employed such as trimethoxyvinylsilane)
• Amounts in wt. % based on the weight of the component

| ***Component A*** | | | |
|---|---|---|---|
| Ingredient | Type | Manufacturer | Amount |
| Sealer 301 | SPUR | Hercuseal | 75 |
| Dynasylan® VTMO | Bonding agent | Degussa | 2.0 |
| Dynasylan® AMMO | Bonding agent | Degussa | 3.5 |
| Uvinul 3434C | UV light stabilizer | BASF | 0.5 |
| Scotchlite^{™} | filler/resin extender | 3M | 3 |
| Glass Bubbles 67432, K1 | | | |
| Aerosil R 812 S | amorphous silica filler | Degussa | 16 |
| | Total wt.% | | 100 |

| ***Component B*** | | | |
|---|---|---|---|
| Ingredient | Type | Manufacturer | Amount |
| Sipernat 22S | amorphous silica filler | Degussa | 10 |
| Water | curing agent | | 70 |
| Aerosil 380 | amorphous silica filler | Degussa | 10 |
| 7 wt% methylcellulose soln. | thickener | | 10 |
| | Total wt.% | | 100 |

Component A and B were mixed as 17 parts A and 0.7 parts B (25:1), and a material having high internal strength combined with elasticity was obtained upon curing of the mixture.

## Claims

1. A two-component curable polymer system comprising a first component including a water-curable silane-modified polymer and a second component comprising a curing agent wherein said second component is in the form of a paste or gel, and wherein said curing agent is water.

2. Curable polymer system of claim 1, wherein the silane-modified polymer is a silyl-terminated polymer.

3. Curable polymer system of claim 1 or 2, wherein the paste or gel is a suspension or dispersion of a thickener in water.

4. Curable polymer system of any one of claims 1-3, wherein the thickener is methylcellulose.

5. Curable polymer system of any one of claims 1-4, wherein the second component is provided in a ratio of 3 - 5 wt.% based on the weight of the mixed composition before curing.

6. Curable polymer system of any one of claims 1-5, wherein the second component further comprises silicon dioxide particles (e.g. Sipernat ® 22S), preferably nanoparticles.

7. Curable polymer system of any one of claims 1-6, wherein the water-curable silane-modified polymer is a Silane Modified Polyurethane Prepolymer (SPUR)).

8. A cured polymer composition formed as a reaction product of a silane-modified polymer and water as a curing agent in the form of a paste or gel.

9. Cured polymer composition according to claim 8, having a shore-A hardness of at least 80, more preferably at least 82.

10. Cured polymer composition, wherein the composition is an adhesive, a sealant or a (wood-)repair material.

11. Use of water in the form of a paste or gel as a curing agent for curing a silane-modified polymer, wherein said paste or gel is obtained by mixing said water with an appropriate amount of thickener material, preferably methylcellulose.

12. A (wood-)repair material comprising the curable polymer system of any one of claims 1-7.

13. Use of a cured polymer composition according to any one of claims 8-10 in the form of an adhesive composition, a sealant composition (joint sealing applications), an elastomer composition, a coating composition, a (wood-)repair material or a dental repair composition.

14. A method of preparing a cured polymer composition comprising the steps of mixing a first component including a water-curable silane-modified polymer with a second component comprising water as a curing agent wherein said second component is in the form of a paste or gel, and allowing the mixture to cure.
